# FASCICULE DE BREVET EUROPEEN

(11) **EP 1 349 793 B1**
(45) Date de publication et mention de la délivrance du brevet: **28.12.2005**
(21) Numéro de dépôt: 02710983.4
(22) Date de dépôt: 11.01.2002
(51) Int. Cl.: B65D 41/04

(54) **DISPOSITIF DE BOUCHAGE ET RECIPIENT EQUIPE D'UN TEL DISPOSITIF**
VERSCHLUSSVORRICHTUNG UND DAMIT AUSGESTATTETER BEHÄLTER
CLOSURE DEVICE AND CONTAINER EQUIPPED WITH SAME

(30) Priorité: 12.01.2001 FR 0100429
(43) Date de publication de la demande: 08.10.2003
(73) Titulaire: Tetra Laval Holdings & Finance S.A., 1009 Pully (CH)
(72) Inventeur: BRON, Pascale, F-69480 ANSE (FR); MIEGE, Sylvie, F-69100 VILLEURBANNE (FR); LUZZATO, Michel, F-69005 LYON (FR); ODET, Philippe, F-69830 SAINT-GEORGES-DE-RENEINS (FR)
(74) Mandataire: Myon, Gérard Jean-Pierre
(86) Numéro de dépôt international: PCT/FR2002/000109
(87) Numéro de publication internationale: WO 2002/055398

(56) Documents cités:
- EP-A- 0 970 893
- WO-A-99/02419
- GB-A- 810 786
- GB-A- 2 297 711
- US-A- 5 356 021

## Description

L'invention a trait à un procédé de fabrication d'un dispositif de bouchage pour un récipient. L'invention a également trait à un dispositif de bouchage pour un récipient et à un récipient équipé d'un tel dispositif. Un tel procédé et un tel disposition sont connus du document EP-A-0 970 893. Les caractéristiques structurelles connues dudit document sont incluses dans le préambule de la revendication 8.

Il est connu de réaliser des récipients pour liquides, tels que des bouteilles pour des boissons, par extrusion/soufflage ou injection/soufflage de matière plastique. Il est connu d'équiper de telles bouteilles d'un bouchon, également réalisé en matière plastique. Il est essentiel que ces récipients soient bouchés de façon étanche en vue de permettre le stockage prolongé des produits qu'ils contiennent. Il convient en effet d'éviter que de l'oxygène puisse pénétrer à l'intérieur d'un récipient bouché afin de limiter les risques d'oxydation de son contenu. En outre, dans le cas de récipients contenant un liquide gazeux, tel qu'une bière ou une boisson carbonatée, il convient d'éviter que le gaz contenu dans le liquide ne s'échappe à l'extérieur du récipient. Il convient également de limiter les transferts entre l'intérieur et l'extérieur d'un récipient pour empêcher une dégradation des propriétés organoleptiques ou du goût d'une boisson telle qu'un jus de fruits ou une eau minérale. Pour la partie principale du récipient, telle qu'une bouteille en matière plastique, on sait empêcher les migrations de gaz de/ou vers le volume intérieur du récipient en apposant un revêtement interne ou externe, par exemple en oxyde de silice ou en polyamide, sur ce corps.

Dans ce cas, les fuites de gaz sont concentrées au niveau du bouchon du dispositif de bouchage. En effet, le bouchon ne peut pas être, à lui seul, étanche aux gaz. S'il est équipé d'une pastille étanche aux gaz, la matière utilisée pour cette pastille est relativement rigide, de sorte qu'elle ne peut pas épouser de façon suffisamment précise la forme du goulot avec laquelle elle doit coopérer, ce qui induit un risque de fuite à l'interface entre ce goulot et cette pastille. Au contraire, si une matière souple est utilisée pour constituer un joint comme dans EP-A-0 970 893, cette matière ne permet pas de limiter efficacement les fuites de gaz par perméabilité à travers le bouchon. En effet, dans cet état de la technique, un même matériau plastique, par exemple du type copolymère éthylène/1-butène, peut, éventuellement, être appliqué en couches successives mais n'est pas complètement étanche puisque son coefficient de transfert d'oxygène demeure non nul. De plus, l'étanchéité obtenue n'est pas toujours satisfaisante. Ces propriétés de barrière ou d'étanchéité imparfaites sont à rapprocher des nécessaires compromis à mettre en oeuvre pour faire remplir à un même matériau des fonctions peu compatibles.

On a pu envisager d'équiper un bouchon d'une feuille en aluminium sur laquelle serait apposée une mousse de polypropylène destinée à venir en appui contre le goulot d'une bouteille. Un tel bouchon ne donne pas satisfaction dans la mesure où un interstice est créé entre la feuille d'aluminium, qui est flottante, et le voile de fond du bouchon, cet interstice étant propice au développement de germes et/ou de bactéries susceptibles de contaminer le contenu du récipient. En outre, le prix de revient d'un tel dispositif est élevé. Enfin, la feuille en aluminium s'avère gênante lors du retraitement d'un tel bouchon, car elle doit être traitée différemment de la matière plastique.

C'est à ces inconvénients qu'entend plus particulièrement remédier l'invention en proposant un procédé économique de fabrication d'un dispositif de bouchage qui permet de rendre étanche un récipient, tout particulièrement en évitant les migrations de gaz de l'intérieur vers l'extérieur ou de l'extérieur vers l'intérieur du récipient.

Dans cet esprit, l'invention concerne un procédé de fabrication d'un dispositif de bouchage dans lequel un bouchon moulé en matière plastique est équipé d'un joint d'étanchéité apte à être disposé en appui contre le col d'un récipient. Ce procédé est caractérisé en ce qu'il comprend des étapes consistant à :
- mettre en place, au voisinage d'une surface interne d'un voile de fond du bouchon, une première couche de matériau imperméable à un ou des gaz prédéterminés, cette première couche étant une couche d'oxyde de silice ou de carbone sous forme diamant ou amorphe intégrée à un complexe multicouche disposé contre le voile de fond, et
- déposer sur cette première couche, en place dans ce bouchon, une seconde couche réalisée dans un matériau élastique et différent du matériau constitutif de la première couche, cette seconde couche étant destinée à former le joint, en isolant cette première couche de l'atmosphère ambiante.

Grâce au procédé de l'invention, on évite le développement de germes au voisinage de la couche imperméable en isolant celle-ci de l'atmosphère ambiante grâce à la seconde couche qui forme le joint d'étanchéité. Cette seconde couche est avantageusement réalisée par surmoulage sur la première couche, ce qui garantit son adaptation à la géométrie exacte de l'intérieur du bouchon. Selon l'invention, le matériau de la première couche peut être choisi principalement pour les propriétés d'étanchéité au(x) gaz de cette première couche, alors que le matériau de la seconde couche peut être choisi spécifiquement en fonction de son élasticité pour remplir efficacement son rôle de joint.

Selon un premier mode de réalisation avantageux de l'invention, le procédé comprend une étape consistant à surmouler, par injection ou compression, la première couche contre le voile. Grâce à cet aspect de l'invention, aucun interstice ne peut être créé entre la première couche, qui est imperméable, et le voile de fond du bouchon.

Selon un autre mode de réalisation avantageux de l'invention, il est prévu la mise en place d'une plaque, pré-découpée dans un matériau imperméable au gaz, au voisinage du voile de fond du bouchon, cette plaque étant ensuite immobilisée contre ce voile par le dépôt de la seconde couche.

Selon un autre mode de réalisation avantageux de l'invention, la première couche est projetée sur la surface interne du voile de fond du bouchon.

Quel que soit le mode de réalisation considéré, il peut être prévu une étape préalable de moulage du bouchon, la mise en place de la première couche et le dépôt de la seconde couche étant réalisée en continu, immédiatement après le moulage du bouchon. Cet aspect continu du procédé évite le dépôt éventuel d'impuretés sur le voile de fond du bouchon, lors d'une étape de stockage intermédiaire.

L'invention concerne également un dispositif de bouchage susceptible d'être fabriqué selon le procédé précédemment décrit et, plus précisément, un dispositif de bouchage qui comprend une couche de matériau imperméable à un ou des gaz prédéterminés intercalée entre un joint et le voile de fond de son bouchon, cette couche étant isolée de l'atmosphère ambiante par ce bouchon et ce joint qui est réalisé dans un matériau différent de celui de la couche de matériau imperméable au(x) gaz, alors que la couche de matériau imperméable comprend une couche d'oxyde de silice, ou de carbone sous forme diamant ou amorphe, intégrée à un complexe multicouches disposé contre le voile de fond et recouvert d'une couche de matériau élastique formant le joint.

Selon des aspects avantageux de l'invention, ce procédé et ce dispositif comprennent une ou plusieurs des caractéristiques suivantes :
- Le joint est réalisé à base d'un copolymère d'éthyle acétate de vinyle (EVA), en élastomère, notamment un dérivé du polyamide (PA), en copolymère de polyamide et/ou de poly éther. Ce joint peut également recevoir, dans sa composition, un composant qui le rend apte à absorber un gaz tel que l'oxygène, en particulier l'oxygène du « vide de tête » d'une bouteille et/ou l'oxygène provenant du produit contenu dans une bouteille.
- Le joint est globalement en forme de disque, avec un rayon sensiblement égal au rayon intérieur du bouchon, de telle sorte qu'il isole efficacement la couche de matériau imperméable de par sa simple mise en place dans le bouchon. La couche de matériau imperméable peut ainsi être totalement isolée du milieu extérieur, ce qui autorise la réalisation de cette couche avec des matériaux spécifiques qui ne pourraient pas nécessairement être utilisés seuls car ils sont susceptibles de se dégrader au contact du produit ou de l'air.

L'invention concerne enfin un récipient pour liquide, notamment une bouteille en matière plastique, équipé d'un dispositif de bouchage tel que précédemment décrit. Un tel récipient permet de stocker, pendant une période relativement longue et sans risque d'altération, le produit qu'il contient.

L'invention sera mieux comprise et d'autres avantages de celle-ci apparaîtront plus clairement à la lumière de la description qui va suivre de trois dispositifs de bouchage conformes à l'invention et de leurs procédés de fabrication respectifs, donnée uniquement à titre d'exemple et faite en référence aux dessins annexés dans lesquels :
- la figure 1 est une coupe longitudinale en perspective d'un dispositif de bouchage conforme à l'invention, lors d'une première étape de fabrication ;
- la figure 2 est une vue analogue à la figure 1 lors d'une seconde étape de fabrication ;
- la figure 3 est une vue à plus grande échelle du détail III à la figure 2 ;
- la figure 4 est une vue analogue à la figure 1 lors d'une troisième étape de fabrication ;
- la figure 5 est une vue analogue à la figure 1 au terme du procédé de fabrication du dispositif ;
- la figure 6 est une vue de détail à plus grande échelle du détail VI à la figure 5 ;
- la figure 7 est une représentation de principe du dispositif de bouchage des figures 1 à 6 monté sur le goulot d'un récipient ;
- la figure 8 est une représentation schématique de principe d'une installation de fabrication du dispositif des figures 1 à 6 ;
- la figure 9 est une vue analogue à la figure 2 pour un dispositif conforme à un second mode de réalisation de l'invention ;
- la figure 10 est une vue analogue à la figure 9 lors d'une troisième étape de fabrication du bouchon ;
- la figure 11 est une vue analogue à la figure 9 au terme de la fabrication du dispositif ;
- la figure 12 est une vue à plus grande échelle du détail XII à la figure 11 ;
- la figure 13 est une vue analogue à la figure 2 pour un dispositif conforme à un troisième mode de réalisation de l'invention et
- la figure 14 est une vue analogue à la figure 6 pour le dispositif de la figure 13.

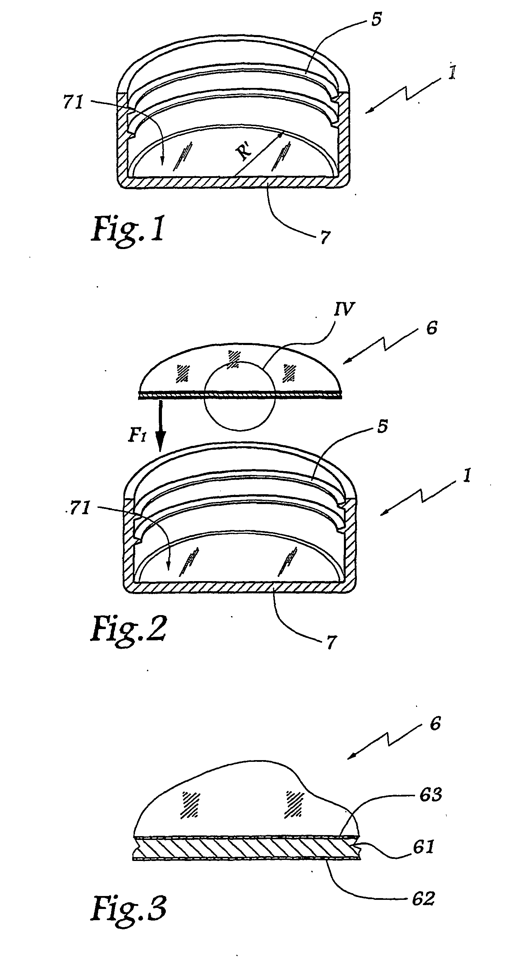

Le bouchon 1 représenté aux figures 1 à 7 est destiné à être monté sur une bouteille 2 pourvue d'un goulot 3 équipé d'un filetage externe 4.

Le bouchon 1 est pourvu d'un filet interne 5.

Le bouchon 1 est moulé par compression dans un moule à barillet 101 d'une installation 100 de fabrication en continu de dispositifs de bouchage conformes à l'invention. Le bouchon 1 est moulé à partir de polyéthylène rigide, de polypropylène rigide, de polyamide rigide ou d'un matériau équivalent.

Compte tenu des tolérances de fabrication du goulot 3 et du bouchon 1, il est nécessaire de prévoir un joint d'étanchéité entre ce goulot et ce bouchon.

Avant la mise en place d'un tel joint d'étanchéité, un complexe imperméable 6 découpé sous la forme d'un disque est introduit contre la surface interne 71 du voile de fond 7 du bouchon 1.

Ainsi qu'il ressort plus clairement de la figure 3, le complexe 6 comprend une âme 61 en polypropylène ou en PET revêtue, sur une face destinée à venir au contact de la surface 71, d'une couche d'adhérence 62 en polyéthylène ou en polypropylène. Sur sa face opposée, l'âme 61 est revêtue d'une couche 63 d'oxyde de silice qui rend le complexe 6 étanche à l'oxygène et au gaz carbonique.

Le complexe 6 est mis en place dans le bouchon 1, comme représenté par la flèche F₁, au moyen d'un dispositif automatique à barillet 102 alimenté par une goulotte 103 à partir du moule 101.

Le complexe 6 mentionné ci-dessus pourrait également être formé par :
- un dépôt très fin, sur un disque support, de carbone diamant ou de carbone amorphe, ce dépôt étant réalisé par une technique de dépôt plasma ou de pulvérisation. Ces techniques de dépôt s'appliquent également au dépôt de la couche 63 d'oxyde de silicium. En variante, un vernis ou une laque barrière au(x) gaz peut également être appliqué sur un support.
- un matériau particulier, de type PVC, PVDC, EVOH, PA, ou un mélange de ces matériaux. On peut également utiliser le PEN (polyéthylène naphtalate), le PVA (polyvinyle alcool), les copolymères acrylates de type PAN (polyacrylonitrile), le PPMA (polyméthylméthacrylate), les copolymères de butadiène, le styrène, le BOPP (polypropylène bi-orienté) ou un de leurs mélanges.

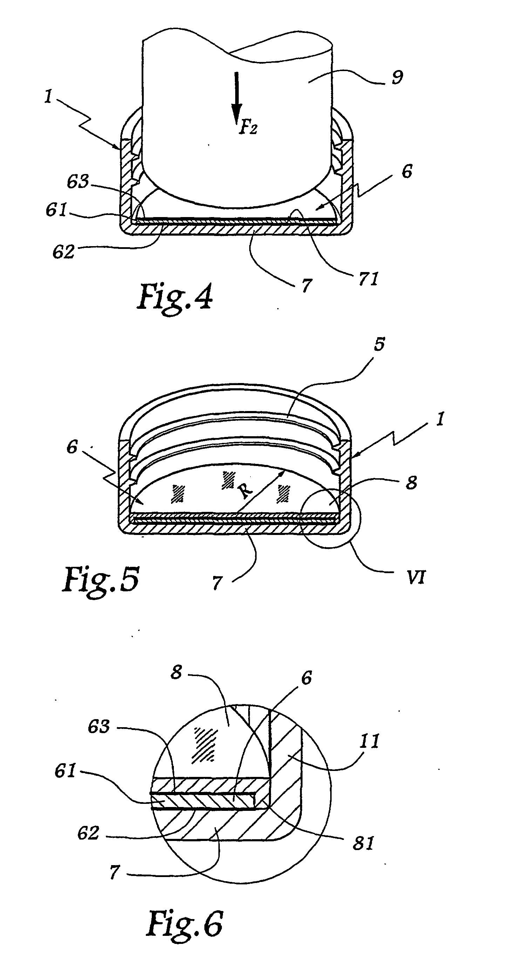

Ensuite, un joint 8 en copolymère d'acétate de vinyle (EVA), en élastomère, notamment dérivé du polyamide (PA), ou dans un autre matériau élastique est surmoulé sur le complexe 6 par compression grâce à un piston 9 introduit dans le bouchon 1, comme représenté par la flèche F₂ à la figure 4. La matière destinée à former le joint 8 est déposée sur le complexe 6 avant l'introduction du piston 9 dans le bouchon 1. Le joint 8 peut également être en copolymère de PA et/ou de poly éther.

Le joint 8 est formé de telle sorte qu'il isole complètement et immobilise le complexe 6 contre la surface 71, ce qui a pour effet d'empêcher tout développement de germes ou de bactéries.

Comme il ressort de la figure 6, le joint 8 peut former une jupe comblant un éventuel espace annulaire demeurant entre le complexe 6 et le bouchon 1.

Le joint 8 est en forme de disque et l'on note R son rayon. On note R' le rayon intérieur du bouchon 1 dans ses parties distinctes du filet 5. Les rayons R et R' sont sensiblement égaux puisque le joint 8 s'étend jusqu'au contact de la cloison annulaire 11 du bouchon 1.

L'opération de surmoulage du joint 8 sur le complexe. 6 a lieu dans un moule à barillet 104 alimenté par une goulotte 105 à partir du dispositif 102.

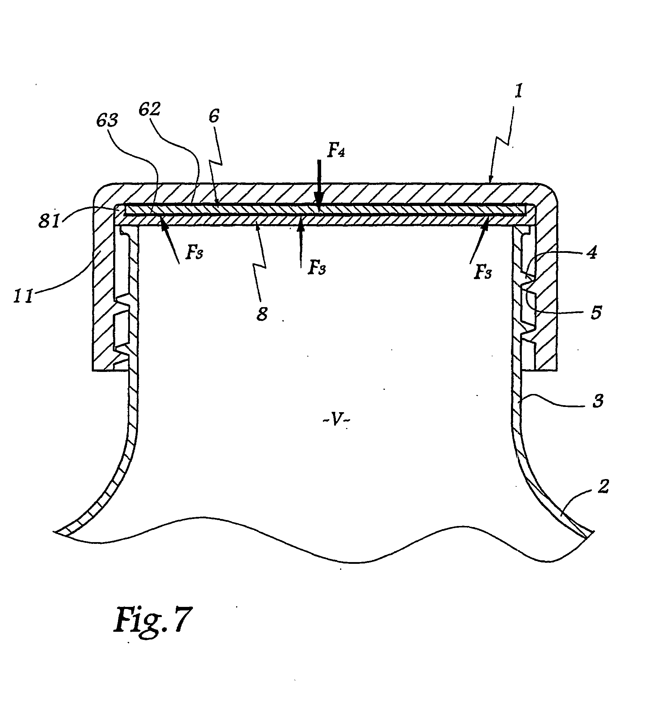

Comme il ressort plus particulièrement des figures 6 et 7, lorsque le dispositif de bouchage formé des éléments 1, 6 et 8 est terminé, il comprend un joint souple 8 susceptible de s'adapter aisément à la géométrie du col 3, alors que le complexe 6, et en particulier sa couche 63, s'oppose à toute migration de gaz depuis le volume intérieur V de la bouteille 2 vers l'extérieur, ceci étant représenté par les flèches F₃, et depuis l'extérieur vers ce volume, ceci étant représenté par les flèches F₄ à la figure 7.

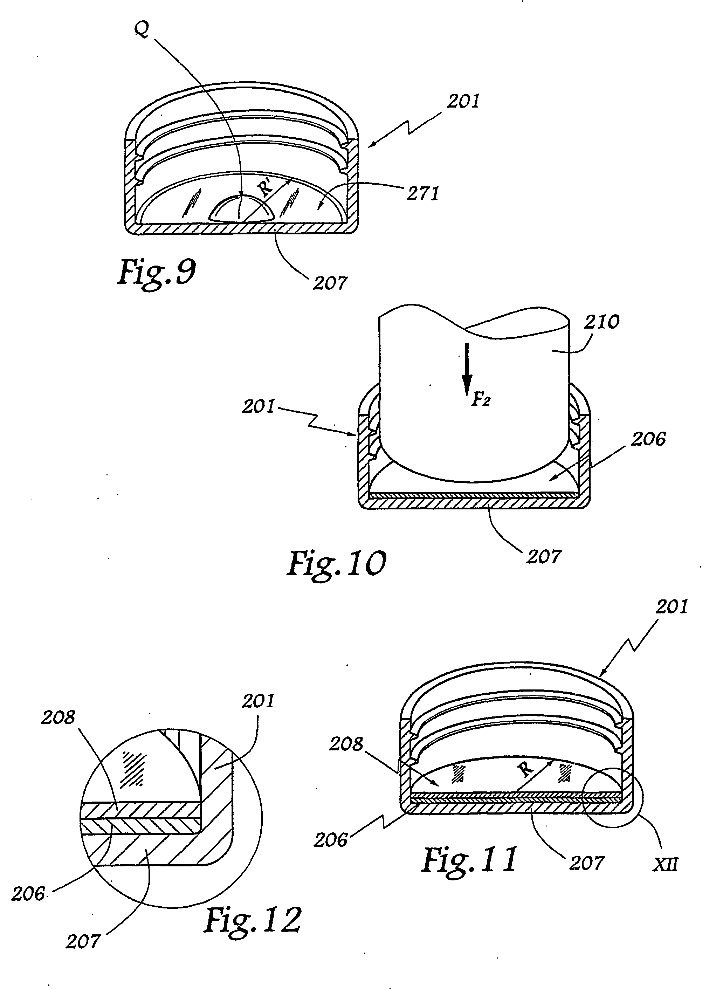

Dans le second mode de réalisation de l'invention représenté aux figures 9 à 12, les éléments analogues à ceux du premier mode de réalisation portent des références identiques augmentées de 200. Dans ce mode de réalisation, un bouchon 201 est pourvu d'un voile de fond 207 dont on note 271 la surface interne.

Sur cette surface interne est déposée une quantité Q de matière plastique imperméable à l'oxygène et au gaz carbonique. Il peut s'agir de polychlorure de vinyle (PVC), de polychlorure de vinylidène (PVDC), d'éthylène vinyle alcool (EVOH), de polyamide ou d'un mélange à base d'un de ces produits. En variante, on peut utiliser pour cette couche du polyéthylène naphtalate (PEN), du polyvinyle alcool (PVA), du copolymère acrylate de type polyacrylonitrile (PAN), du polyméthylméthacrylate (PMMA), du copolymère de butadiène, du styrène, du polypropylène bi-orienté (BOPP).

Ensuite, un piston 110 est appliqué sur la quantité Q de matière pour la répartir et la comprimer de façon à former une couche 206 de matière imperméable recouvrant la surface 271. En d'autres termes, la couche 206 est surmoulée à l'intérieur du bouchon 201.

Ensuite, un joint 208 du type du joint 108 du premier mode de réalisation est réalisé de la façon décrite en référence à la figure 4 du premier mode de réalisation, ce qui permet d'obtenir la structure représentée aux figures 11 et 12 qui comprend une première couche 206 imperméable aux gaz appliquée sur le voile de fond 207 du bouchon 201, et une seconde couche 208, élastiquement déformable et susceptible de s'adapter à la géométrie exacte du goulot d'une bouteille et, plus généralement de tout récipient.

Comme précédemment, la couche imperméable 206 est noyée contre le voile de fond 207 du bouchon 201 par la couche formant joint 208, de sorte qu'elle est efficacement isolée des pollutions extérieures.

Comme précédemment, les rayons R du joint 208 et R' du voile de fond 207 sont sensiblement égaux.

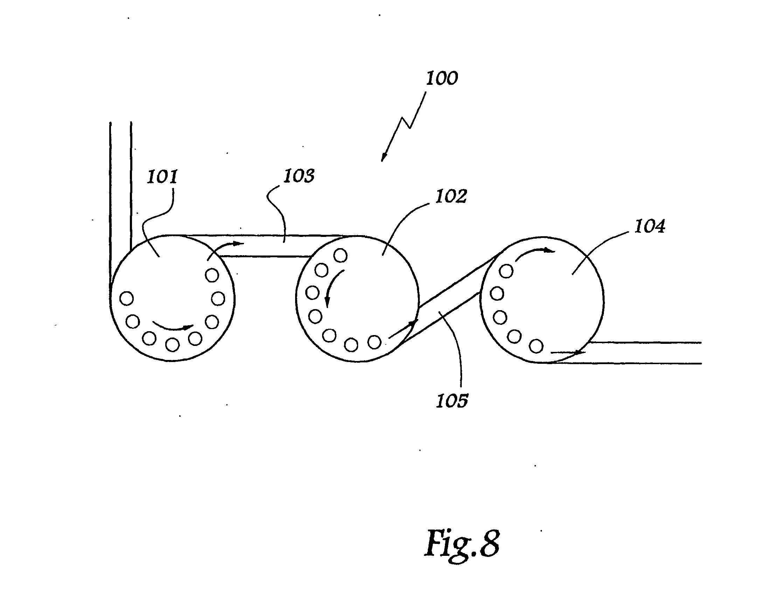

Le dispositif de bouchage de ce second mode de réalisation peut être obtenu grâce à une installation semblable à celle représentée à la figure 8, le dispositif 102 de mise en place du complexe 6 du premier mode de réalisation étant remplacé par un moule à barillet, dans lequel est surmoulée la couche 206.

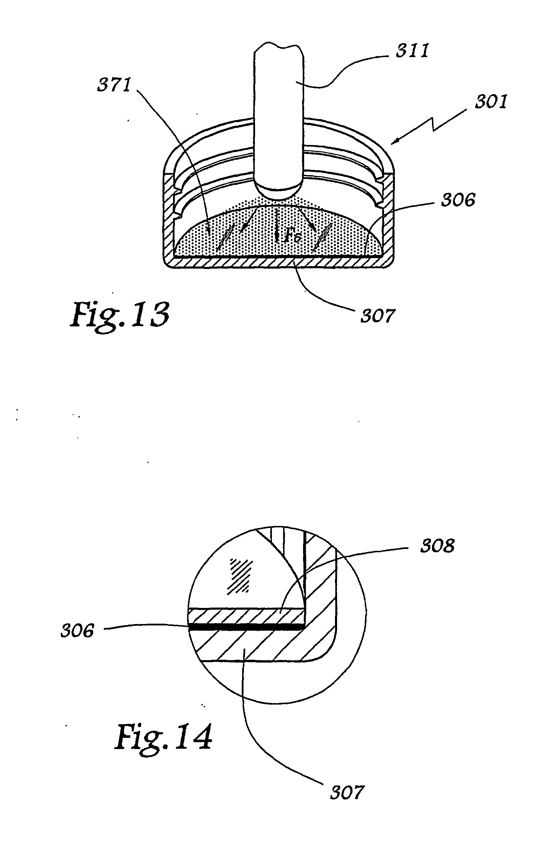

Dans le troisième mode de réalisation de l'invention représenté aux figures 13 et 14, les éléments analogues à ceux du premier mode de réalisation portent des références identiques augmentées de 300. Dans ce mode de réalisation, un bouchon 301 est pourvu d'un voile de fond 307 dont on note 371 la surface interne.

Comme représenté à la figure 13, une couche 306 formant barrière à la migration des gaz tel que l'oxygène et/ou le gaz carbonique est projetée grâce à une buse 311 sur la surface 371, comme représenté par les flèches F₅.

La couche 306 est ainsi obtenue par un dépôt d'oxyde de silice. Il pourrait également s'agir d'un vernis barrière La couche 306 pourrait être obtenue par métallisation. Bien que cela n'est pas représenté, la couche 306 peut recouvrir tout ou partie de la surface interne de la cloison annulaire du bouchon.

Après le dépôt de la couche 306, un joint 308 est surmoulé sur le fond du bouchon 301, d'une façon analogue à celle décrite en référence au premier mode de réalisation, ce joint isolant efficacement la couche 306 de l'atmosphère ambiante.

Comme précédemment, la couche formant le joint 308 est réalisée dans un matériau élastiquement déformable apte à créer un appui étanche sur le goulot d'un récipient.

Le fait de mouler le bouchon 1, 201 ou 301 par compression permet un suivi individualisé des bouchons et un contrôle de qualité efficace du processus de mise en place des couches imperméables et des joints.

Cependant, le bouchon pourrait également être moulé par injection.

Afin de limiter les risques de migration d'oxygène vers l'extérieur, la couche 8, 208 ou 308 formant joint peut être réalisée dans un matériau absorbant l'oxygène. Dans ce cas, la seconde couche protège la première d'éventuelles altérations dues à l'oxygène.

## Revendications

1. Procédé de fabrication d'un dispositif de bouchage dans lequel un bouchon moulé en matière plastique est équipé d'un joint d'étanchéité apte à être disposé en appui contre le col d'un récipient, **caractérisé en ce qu'**il comprend des étapes consistant à :
- mettre en place, au voisinage d'une surface interne (71 ; 271 ; 371) d'un voile de fond (7 ; 207 ; 307) dudit bouchon (1, 201 ; 301), une première couche (6 ; 206 ; 306) de matière imperméable à un ou des gaz prédéterminés, ladite première couche étant une couche (63) d'oxyde de silice ou de carbone sous forme diamant ou amorphe, intégrée à un complexe multicouche (6) disposé contre ledit voile de fond, et
- déposer, sur ladite première couche en place dans ledit bouchon, une seconde couche (8 ; 208 ; 308) réalisée dans un matériau élastique et différent du matériau constitutif de la première couche, ladite seconde couche étant destinée à former ledit joint, en isolant ladite première couche de l'atmosphère ambiante.

2. Procédé selon la revendication 1, **caractérisé en ce qu'**il comprend une étape consistant à surmouler ladite seconde couche (8 ; 208 ; 308) sur ladite première couche (6 ; 206 ; 306).

3. Procédé selon l'une des revendications 1 ou 2, **caractérisé en ce qu'**il comprend une étape consistant à surmouler, par injection ou par compression, ladite première couche (206) contre ledit voile de fond (207).

4. Procédé selon l'une des revendications 1 ou 2, **caractérisé en ce qu'**il comprend une étape de mise en place (en 102) d'une plaque (6) prédécoupée dans un matériau imperméable auxdits gaz, au voisinage dudit voile (7), ladite plaque étant ensuite immobilisée contre ledit voile par le dépôt de ladite seconde couche (8).

5. Procédé selon l'une des revendications 1 ou 2, **caractérisé en ce qu'**il comprend une étape de projection (F₅) de ladite première couche (306) sur ladite surface interne (371) dudit voile de fond (307).

6. Procédé selon l'une des revendications précédentes, **caractérisé en ce qu'**il comprend une étape préalable (en 101) de moulage dudit bouchon (1 ; 201 ; 301), la mise en place de ladite première couche (6 ; 206 ; 306) et le dépôt de ladite seconde couche (8 ; 208 ; 308) étant réalisés en continu immédiatement après le moulage dudit bouchon.

7. Procédé selon l'une des revendications 1 à 6, **caractérisé en ce que** ladite couche (6 ; 206 ; 306) de matériau imperméable est une couche (63) d'oxyde de silice, ou de carbone sous forme diamant ou amorphe, intégrée à un complexe multicouche (6) disposé contre ledit voile de fond (7) et recouvert d'une couche (8) de matériau élastique formant ledit joint.

8. Dispositif de bouchage comprenant un bouchon moulé par injection ou compression de matière plastique et équipé d'un joint d'étanchéité apte à être disposé en appui contre le col d'un récipient, ledit dispositif comprenant une couche (6 ; 206 ; 306) de matériau imperméable à un ou des gaz prédéterminés intercalée entre ledit joint (8 ; 208 ; 308) et un voile de fond (7 ; 207 ; 307) dudit bouchon (1 ; 201 ; 301), ladite couche étant isolée de l'atmosphère ambiante par ledit bouchon et ledit joint, ledit joint (8 ; 208 ; 308) étant réalisé dans un matériau différent de celui de la couche (6 ; 206 ; 306) de matériau imperméable à un ou des gaz prédéterminés, **caractérisé en ce que** ladite couche (6 ; 206 ; 306) de matériau imperméable est une couche (63) d'oxyde de silice, ou de carbone sous forme diamant ou amorphe, intégrée à un complexe multicouche (6) disposé contre ledit voile de fond (7) et recouvert d'une couche (8) de matériau élastique formant ledit joint.

9. Procédé selon l'une des revendications 1 à 7 ou dispositif selon la revendication 8, **caractérisé en ce que** ladite couche (206 ; 306) de matériau imperméable est réalisée en polychlorure de vinyle (PVC), en polychlorure de vinylidène (PVDC), en éthylène vinyle alcool (EVOH), en polyamide (PA), en polyéthylène naphtalate (PEN), en polyvinyl alcool (PVA), en copolymère acrylate de type polyacrylonitrile (PAN) , en polyméthylméthacrylate (PMMA) , en copolymère de butadiène, en styrène, en polypropylène bi-orienté (BOPP) ou dans un mélange à base de ces produits.

10. Procédé selon l'une des revendications 1 à 7 ou dispositif selon l'une des revendications 8 ou 9, **caractérisé en ce que** ladite première couche (306) comprend un oxyde de silice, un vernis ou une laque ou est réalisée par métallisation.

11. Procédé selon l'une des revendications 1 à 7 ou dispositif selon l'une des revendications 8 à 10, **caractérisé en ce que** ledit joint (8 ; 208) est réalisé à base d'un copolymère d'ethyle acétate de vinyle (EVA), en élastomère, notamment un dérivé du polyalmide (PA), ou en copolymère de polyamide et/ou de poly ether.

12. Procédé selon l'une des revendications 1 à 7 ou dispositif selon l'une des revendications 8 à 11, **caractérisé en ce que** ledit joint (8 ; 208) est réalisé dans un matériau apte à absorber un ou des gaz, de préférence un matériau apte à absorber l'oxygène.

13. Récipient pour liquide, notamment bouteille en matière plastique, équipée d'un dispositif de bouchage (1-8 ; 201-208) selon l'une des revendications 8 à 12.

## Patentansprüche

1. Verfahren zum Herstellen einer Verschließvorrichtung, bei welchem ein aus Kunststoff geformter Stopfen mit einer Dichtung versehen ist, die in Auflage gegen den Hals eines Behälters angeordnet werden kann, **dadurch gekennzeichnet, dass** es die folgenden Schritte umfasst:
- Einrichten in der Nähe einer inneren Fläche (71; 271; 371) einer Bodenschicht (7; 207; 307) des Stopfens (1, 201; 301) einer ersten Schicht (6; 206; 306) aus für ein oder mehrere vorausbestimmte Gase undurchlässigem Material, wobei die erste Schicht eine Schicht (63) aus Siliciumoxid oder Kohlenstoff in Diamantform oder amorph ist, eingebaut in eine Multischichtenanordnung (6), die gegen die Bodenschicht angelegt ist, und
- Anordnen auf der ersten Schicht, die in dem Stopfen angebracht ist, einer zweiten Schicht (8; 208; 308), die aus einem elastischen Werkstoff hergestellt und anders ist als der Werkstoff, der die erste Schicht bildet, wobei die zweite Schicht dazu bestimmt ist, die Dichtung zu bilden, indem sie die erste Schicht von der Umgebungsatmosphäre isoliert.

2. Verfahren nach Anspruch 1, **dadurch gekennzeichnet, dass** es einen Schritt umfasst, der im Abformen der zweiten Schicht (8; 208; 308) auf der ersten Schicht (6; 206; 306) besteht.

3. Verfahren nach einem der Ansprüche 1 oder 2, **dadurch gekennzeichnet, dass** es einen Schritt umfasst, der darin besteht, durch Einspritzen oder durch Komprimieren die erste Schicht (206) gegen die Bodenschicht (207) abzuformen.

4. Verfahren nach einem der Ansprüche 1 oder 2, **dadurch gekennzeichnet, dass** es einen Schritt des Anbringens (in 102) in der Nähe der Bodenschicht (7) einer Platte (6) umfasst, die aus einem für die Gase undurchlässigen Werkstoff vorausgeschnitten ist, wobei die Platte dann gegen die Bodenschicht durch das Ablagern der zweiten Schicht (8) stillgestellt wird.

5. Verfahren nach einem der Ansprüche 1 oder 2, **dadurch gekennzeichnet, dass** es einen Schritt des Spritzens (F₅) der ersten Schicht (306) auf die innere Schicht (371) der Bodenschicht (307) umfasst.

6. Verfahren nach einem der vorhergehenden Ansprüche, **dadurch gekennzeichnet, dass** es einen vorausgehenden Schritt (in 101) des Formens des Stopfens (1; 201; 301) umfasst, wobei das Anbringen der ersten Schicht (6; 206; 306) und das Ablagern der zweiten Schicht (8; 208; 308) kontinuierlich unverzüglich nach dem Formen des Stopfens durchgeführt werden.

7. Verfahren nach einem der Ansprüche 1 bis 6, **dadurch gekennzeichnet, dass** die Schicht (6; 206; 306) aus undurchlässigem Werkstoff eine Schicht (63) aus Siliciumoxid oder Kohlenstoff in Diamantform oder amorph ist, die in eine Multischichtenanordnung (6) eingebaut ist, die gegen die Bodenschicht (7) angeordnet und mit einer Schicht (8) aus elastischem Werkstoff, der die Dichtung bildet, abgedeckt ist.

8. Verfahren zum Verschließen, das einen durch Einspritzen oder Komprimieren von Kunststoff geformten Stopfen umfasst, der mit einer Dichtung versehen ist, die in Auflage gegen den Hals eines Behälters angeordnet werden kann, wobei die Vorrichtung eine Schicht (6; 206; 306) aus für eines oder mehrere vorausbestimmte Gase undurchlässigem Werkstoff, die zwischen die Dichtung (8; 208; 308) und eine Bodenschicht (7; 207; 307) des Stopfens (1; 201; 301) eingefügt wird, umfasst, wobei die Schicht von der Umgebungsatmosphäre durch den Stopfen und die Dichtung isoliert ist, wobei die Dichtung (8; 208; 308) aus einem anderen Werkstoff als dem der Schicht (6; 206; 306) aus für eines oder mehrere vorausbestimmte Gase undurchlässigem Werkstoff hergestellt ist, **dadurch gekennzeichnet, dass** die Schicht (6; 206; 306) aus undurchlässigem Werkstoff eine Schicht (63) aus Siliciumoxid oder Kohlenstoff in Diamantform oder amorph ist, die in eine Multischichtenanordnung (6) integriert ist, die gegen die Bodenschicht (7) angeordnet und mit einer Schicht (8) aus elastischem Werkstoff, der die Dichtung bildet, bedeckt ist.

9. Verfahren nach einem der Ansprüche 1 bis 7 oder Vorrichtung nach Anspruch 8, **dadurch gekennzeichnet, dass** die Schicht (206; 306) aus undurchlässigem Werkstoff hergestellt ist aus Vinylpolychlorid (PVC), aus Vinylidenpolychlorid (PVDC), aus Ethylenvinylalkohol (EVOH), aus Polyamid (PA), aus Polyethylennaphtalat (PEN), aus Polyvinylalkohol (PVA), aus Copolymeracrylat des Typs Polyacrylonitril (PAN), aus Polymethylmethacrylat (PMMA), aus Butadincopolymer, aus Styrol, aus bi-orientiertem Polypropylen (BOPP) oder aus einem Gemisch auf der Grundlage dieser Produkte.

10. Verfahren nach einem der Ansprüche 1 bis 7 oder Vorrichtung nach einem der Ansprüche 8 oder 9, **dadurch gekennzeichnet, dass** die erste Schicht (306) ein Siliciumoxid, einen Anstrichmittel oder einen Lack umfasst oder durch Metallisierung hergestellt ist.

11. Verfahren nach einem der Ansprüche 1 bis 7 oder Vorrichtung nach einem der Ansprüche 8 bis 10, **dadurch gekennzeichnet, dass** die Dichtung (8, 208) auf der Grundlage eines Ethylvinylacetat-Copolymers (EVA), aus Elastomer, insbesondere einem Polyalmid-Derivat (PA) oder aus Polyamidcopolymer und/oder Polyether hergestellt ist.

12. Verfahren nach einem der Ansprüche 1 bis 7 oder Vorrichtung nach einem der Ansprüche 8 bis 11, **dadurch gekennzeichnet, dass** die Dichtung (8; 208) aus einem Werkstoff hergestellt ist, der eines oder mehrere Gase absorbieren kann, vorzugsweise aus einem Werkstoff, der Sauerstoff absorbieren kann.

13. Behälter für Flüssigkeit, insbesondere Kunststoffflasche, versehen mit einer Verschließvorrichtung (1-8; 201-208) nach einem der Ansprüche 8 bis 12.

## Claims

1. Method for producing a closure device wherein a cap moulded in plastic is fitted with a seal that can be positioned resting against the neck of a container, **characterized in that** it comprises steps consisting of :
- positioning, next to an inner surface (71; 271; 371) of a bottom shell (7; 207; 307) of the said cap (1, 201; 301), a first layer (6; 206; 306) of a material impermeable to one or more predetermined gases, the said first layer being a layer (63) of silicon oxide or carbon in diamond or amorphous form, incorporated in a multilayer complex 6) positioned against the said bottom shell, and
- positioning, on the said first layer in place in the said cap, a second layer (8; 208; 308) made of an elastic material different from the material constituting the first layer, the said second layer being intended to form the said seal, by isolating the said first layer from the ambient atmosphere.

2. Method according to claim 1, **characterized in that** it includes a step consisting of overmoulding the said second layer (8; 208; 308) onto the said first layer (6; 206; 306).

3. Method according to either claim 1 or 2, **characterized in that** it includes a step consisting of overmoulding, by injection or compression, the said first layer (206) against the said bottom shell (207).

4. Method according to either claim 1 or 2, **characterized in that** it includes a step of positioning (at 102) a plate (6) pre-cut from a material impermeable to the said gases, next to the said shell (7), the said plate being then immobilised against the said shell by depositing the said second layer (8) .

5. Method according to either claim 1 or 2, **characterized in that** it includes a step of spraying (F₅) the said first layer (306) onto the said inner surface (371) of the said bottom shell (307).

6. Method according to one of the preceding claims, **characterized in that** it includes a preliminary step (at 101) of moulding the said cap (1; 201; 301), and putting in place the said first layer (6; 206; 306), the said second layer (8; 208; 308) being deposited continuously immediately after the said cap has been moulded.

7. Method according to one of claims 1 to 6, **characterized in that** the said layer (6; 206; 306) of impermeable material is a layer (63) of silicon oxide or carbon in diamond or amorphous form, incorporated in a multilayer complex (6) positioned against the said bottom shell (7), and covered by a layer (8) of elastic material forming the said seal.

8. Closure device comprising a cap moulded from plastic by injection or compression and fitted with a seal capable of being positioned resting against the neck of a container, the said device comprising a layer (6; 206; 306) of a material impermeable to one or more predetermined gases inserted between the said seal (8; 208; 308) and a bottom shell (7; 207; 307) of the said cap (1; 201; 301), the said layer being isolated from the ambient atmosphere by the said cap and the said seal, the said seal (8; 208; 308) being made of a material different from that of the layer (6; 206; 306) of a material impermeable to one or more predetermined gases, **characterized in that** the said layer (6; 206; 306) of impermeable material is a layer (63) of silicon oxide, or carbon in diamond or amorphous form, incorporated in a multilayer complex (6) positioned against the said bottom shell (7) and covered by a layer (8) of elastic material forming the said seal.

9. Method according to one of claims 1 to 7 or device according to claim 8, **characterized in that** the said layer (206; 306) of impermeable material is made of polyvinyl chloride (PVC), polyvinylidine chloride (PVDC), ethylene vinyl alcohol (EVOH), polyamide (PA), polyethylene naphthalate (PEN), polyvinyl alcohol (PVA), an acrylate copolymer of the polyacrylonitrile type (PAN), polymethylmethacrylate (PMMA), a butadiene-styrene copolymer, bioriented polypropylene (BOPP) or of a mixture based on these products.

10. Method according to one of claims 1 to 7 or device according to either of claims 8 or 9, **characterized in that** the said first layer (306) comprises a silicon oxide, a varnish or a lacquer or is made by metallisation.

11. Method according to one of claims 1 to 7 or device according one of claims 8 to 10, **characterized in that** the said seal (8; 208) is made with an ethyl vinyl acetate copolymer (EVA), of an elastomer, in particular a polyamide (PA) derivative or a copolymer of polyamide and/or polyether.

12. Method according to one of claims 1 to 7 or device according one of claims 8 to 11, **characterized in that** the said seal (8; 208) is made of a material capable of absorbing one or more gases, preferably a material capable of absorbing oxygen.

13. Container for liquid, in particular a bottle made of plastic, fitted with a closure device (1-8; 201-208) according to one of claims 8 to 12.
